(19) Europäisches Patentamt
European Patent Office
Office européen des brevets

(11) EP 4 008 565 B1

(12) **EUROPEAN PATENT SPECIFICATION**

(45) Date of publication and mention of the grant of the patent:
**06.12.2023 Bulletin 2023/49**

(21) Application number: **21205520.6**

(22) Date of filing: **29.10.2021**

(51) International Patent Classification (IPC):
***B60C 1/00*** (2006.01) ***B60C 11/00*** (2006.01)
***B60C 11/03*** (2006.01) ***B60C 11/12*** (2006.01)

(52) Cooperative Patent Classification (CPC):
**B60C 11/033; B60C 1/0016; B60C 11/0008; B60C 11/005; B60C 11/1236;** B60C 2011/0025; B60C 2011/0033; B60C 2011/0341

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2020 JP 2020201927**

(43) Date of publication of application:
**08.06.2022 Bulletin 2022/23**

(73) Proprietor: **Sumitomo Rubber Industries, Ltd.**
**Kobe-shi, Hyogo-ken 651-0072 (JP)**

(72) Inventor: **HATA, Kanako**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 1 630 003**
**EP-A1- 2 781 373**
**EP-A1- 3 181 376**
**WO-A1-2014/090845**
**WO-A1-2019/066837**
**JP-A- 2002 225 512**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

Field of the Invention

The present invention relates to a pneumatic tire.

Description of the Background Art

In recent years, due to the growing interest in environmental issues or from the viewpoint of economy, the demand for reducing fuel consumption has been increasing for automobiles, so that there is also a strong demand for improvement in low fuel consumption performance of pneumatic tires that are mounted to automobiles (hereinafter, also referred to simply as "tires").

The low fuel consumption performance of a tire can be evaluated based on rolling resistance, and it is known that the lower the rolling resistance is, the better the low fuel consumption performance of the tire is.

Therefore, it has been conventionally proposed to reduce the rolling resistance and improve the low fuel consumption performance by devising the blending formula of a rubber composition for forming the tread portion of the tire (for example, Japanese Laid-Open Patent Publication No. 2018-178034, Japanese Laid-Open Patent Publication No. 2019-089911, International Publication No. WO2018/186367, Japanese Laid-Open Patent Publication No. 2019-206643).

A tire in accordance with the preamble of claim 1 is known from WO 2014/090845 A1. Related tires are known from EP 2 781 373 A1, EP 1 630 003 A1, EP 3 181 376 A1 and WO 2019/066837 A1.

However, even for the tires produced by the above-described conventional techniques, the reduction of rolling resistance is not yet sufficient, and further improvement is desired. In addition, uneven wear is likely to occur in the tread portions of these tires during running, so that improvement of the uneven wear resistance of the tires is desired.

Therefore, an object of the present invention is to provide a pneumatic tire that achieves both reduction of rolling resistance and improvement of uneven wear resistance.

SUMMARY OF THE INVENTION

The present inventor has conducted an intensive study to solve the above problem and has found that the problem can be solved by a tire having the features of claim 1. Subclaims are directed to preferable embodiments of the invention.

The invention is directed to a pneumatic tire including: a tread portion including at least two or more rubber layers including a surface layer and an inner layer in a center region centered at a tire equator line and having a width that is 50% of a ground-contact width of a ground-contact surface; and sidewall portions each having a sidewall rubber forming an outer surface, wherein

the tread portion has a circumferential groove extending in a circumferential direction, and includes a plurality of land portions demarcated by the circumferential groove and ground-contact end portions,
an outer portion of each sidewall portion is overlapped on an outer side of an end portion in a tire width direction of the tread portion,
each end portion in the width direction of the inner layer of the tread portion is located in a part of an interface between the surface layer of the tread portion and the sidewall portion,
when a complex elastic modulus at 30°C of the surface layer of the tread portion is denoted by $E^*_1$ (MPa) and a complex elastic modulus at 30°C of the inner layer of the tread portion is denoted by $E^*_2$ (MPa), with $E^*_1$ and $E^*_2$ being measured under the conditions of a temperature of 30°C, a frequency of 10 Hz, an initial strain of 5%, and a dynamic strain of 1% with deformation mode being stretch, the following (formula 1) is satisfied, and
when a groove area ratio in the center region is denoted by CR (%) and a groove area ratio in a region obtained by excluding the center region from the ground-contact surface is denoted by SR (%), the following (formula 2) is satisfied,

$$(E^*_2/E^*_1)<1.0 \qquad \text{(formula 1)},$$

$$|CR-SR|\leq 15 \qquad \text{(formula 2)}.$$

In accordance with a preferable embodiment of the present invention, the following (formula 3) is satisfied,

$$(E^*_2/E^*_1)<0.9 \quad \text{(formula 3)}.$$

In accordance with a preferable embodiment of the present invention, the following (formula 4) is satisfied,

$$(E^*_2/E^*_1)<0.8 \quad \text{(formula 4)}.$$

In accordance with a preferable embodiment of the present invention, the following (formula 5) is satisfied,

$$E^*_2\times|CR\text{-}SR|\leq 100 \quad \text{(formula 5)}.$$

In accordance with a preferable embodiment of the present invention, the following (formula 6) is satisfied,

$$E^*_2\times|CR\text{-}SR|\leq 75 \quad \text{(formula 6)}.$$

In accordance with a preferable embodiment of the present invention, when a loss tangent at 30°C of the inner layer of the tread portion is denoted by $\tan\delta_2$, the following (formula 7) is satisfied,

$$\tan\delta_2\times|CR\text{-}SR|\leq 3.75 \quad \text{(formula 7)}.$$

In accordance with a preferable embodiment of the present invention, the pneumatic tire further includes a belt reinforcing layer on a radially inner side of the tread portion, wherein

in the center region of the tread portion,
a height Ht (mm) from an outer peripheral surface of the belt reinforcing layer to a surface of the circumferential land portion is not greater than 30 mm, and a height Hg (mm) from the outer peripheral surface of the belt reinforcing layer to a bottom surface of a main groove is not greater than 5 mm, and
a height h (mm) from the outer peripheral surface of the belt reinforcing layer at a center position in the width direction of the circumferential land portion to an interface between the surface layer and the inner layer of the tread portion is not less than 0.5 mm, and h>Hg is satisfied.

In accordance with a preferable embodiment of the present invention,

sipes are formed on a center land portion and shoulder land portions demarcated by two or more circumferential main grooves provided on the tread portion, and
directions of the sipes in adjacent land portions with respect to the tire circumferential direction are opposite to each other.

In accordance with a preferable embodiment of the present invention,
a ratio of a total groove area to a total area in a ground-contact width of the tread portion is 20 to 40%.
According to the present invention, a pneumatic tire that achieves both reduction of rolling resistance and improvement of uneven wear resistance can be provided.

DESCRIPTION OF THE PREFERRED EMBODIMENTS

Hereinafter, the present invention will be described based on an embodiment.

[1] Characteristics of Tire According to Present Invention

First, the characteristics of the tire according to the present invention will be described.

1. Outline

The tire according to the present invention is a pneumatic tire including: a tread portion including at least two or more rubber layers including a surface layer and an inner layer in a center region centered at a tire equator line and having a width that is 50% of a ground-contact width of a ground-contact surface width; and sidewall portions each having a sidewall rubber forming an outer surface.

In terms of structure, the tread portion has a circumferential groove extending in a circumferential direction and includes a plurality of land portions demarcated by the circumferential groove and ground-contact end portions, an outer portion of each sidewall portion is overlapped on the outer side of an end portion in a tire width direction of the tread portion, and an end portion in the width direction of the inner layer of the tread portion is located in a part of the interface between the surface layer of the tread portion and the sidewall portion.

Meanwhile, in terms of physical properties, when a complex elastic modulus at 30°C of the surface layer of the tread portion is denoted by $E^*_1$ (MPa) and a complex elastic modulus at 30°C of the inner layer of the tread portion is denoted by $E^*_2$ (MPa), $(E^*_2/E^*_1)<1.0$ (formula 1) is satisfied.

Moreover, when a groove area ratio in the center region is denoted by CR (%) and a groove area ratio in a region obtained by excluding the center region from the ground-contact surface is denoted by SR (%), $|CR-SR|\leq 15$ (formula 2) is satisfied.

According to the present invention, by having the above-described characteristics in terms of structure and physical properties, a pneumatic tire that achieves both reduction of rolling resistance and improvement of uneven wear resistance can be provided as described later.

In the above description, the "ground-contact surface" refers to the outer peripheral surface over the entire circumference of the tire that comes into contact with a road surface when the tire is rolled in a state where a normal load is applied to the tire in a state where the tire is fitted on a normal rim and inflated to a normal internal pressure. Specifically, for example, the "ground-contact surface" can be obtained by fitting the tire to the normal rim, inflating the tire to the normal internal pressure, allowing the tire to stand at 25°C for 24 hours, then applying black ink to the surface of the tread, and applying the normal load to the tire to press the tire against a thick paper to transfer the ink to the paper. The total of the areas of the land portions painted in black and the area of the groove in white is a "total ground-contact area". In addition, the "ground-contact width" refers to the maximum width in the tire width direction in the ground-contact surface.

Here, the "normal rim" is a rim that is defined, in a standard system including a standard on which the tire is based, by the standard for each tire, and refers to, for example, the standard rim at an applicable size described in "JATMA YEAR BOOK" in the JATMA (Japan Automobile Tyre Association, Inc.) standard, the "Measuring Rim" described in STANDARDS MANUAL" in the ETRTO (The European Tyre and Rim Technical Organisation) standard, or the "Design Rim" described in "YEAR BOOK" in the TRA (The Tire and Rim Association, Inc.) standard. In the case of a tire that is not specified in any standard, the "normal rim" refers to the rim having the smallest rim diameter, and, next to this, refers to the rim having the smallest rim width, among rims to which the tire can be fitted and which allow the internal pressure of the tire to be maintained, that is, rims that do not cause air leakage from between the rim and the tire.

The "normal internal pressure" is an air pressure that is defined by the standard for each tire, and refers to the maximum air pressure in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. In the case of a tire that is not specified in any standard, the "normal internal pressure" is 250 kPa.

Moreover, the "normal load" is a load that is defined for each tire by the above standard, refers to the maximum mass that is permitted to be applied to the tire, and is the maximum load capacity in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In the case of a tire that is not specified in any standard, the "normal load" can be a value calculated by the following equation.

$$\text{Normal load (kg)} = 0.000011\times V+175$$

$$V = \{Dt^2-(Dt-Ht_1)^2\}\times Wt$$

Here, V denotes the virtual volume occupied by the tire ($mm^3$), Dt denotes the tire outer diameter (mm), $Ht_1$ denotes the tire cross-section height (mm), Wt denotes the tire cross-section width (mm), and the values thereof are values measured in the normal state.

In addition, the tire cross-section width Wt indicates the linear distance of the tire maximum width in the normal state, and does not include surface irregularities such as characters. The tire cross-section height can be obtained by

subtracting a rim diameter (mm) from the outer diameter Dt.

2. Mechanism for Exhibiting Advantageous Effects in Tire According to Present Invention

The mechanism for exhibiting advantageous effects in the tire according to the present invention, that is, the mechanism for achieving both reduction of rolling resistance and improvement of uneven wear resistance, is inferred as follows.

As described above, the tire according to the present invention includes at least two or more rubber layers including a surface layer and an inner layer in a center region centered at the tire equator line and having a width that is 50% of the ground-contact width of the ground-contact surface, and when the complex elastic modulus at 30°C of the surface layer is denoted by $E^*_1$ (MPa) and the complex elastic modulus at 30°C of the inner layer is denoted by $E^*_2$ (MPa), $(E^*_2/E^*_1)<1.0$ (formula 1) is satisfied.

The complex elastic modulus E* is a parameter indicating stiffness. It is considered that by making the complex elastic modulus $E^*_2$ of the inner layer lower than the complex elastic modulus $E^*_1$ of the surface layer as described above, it is possible for the entire tread portion to become deformed from the inside to come into contact with a road surface during running, and uneven deformation of and stress concentration on the tread portion can be suppressed, so that it is considered that the rolling resistance can be reduced and the occurrence of uneven wear can be suppressed. Moreover, it is considered that at the time of coming into contact with the ground, force is less likely to be applied to end portions of the surface layer, and thus slip is likely to occur.

Therefore, it is considered that by covering the end portions of the surface layer with the inner layer having lower stiffness than the surface layer, the ground-contact end portions can follow the road surface even with a slight force, so that it is possible to reduce uneven wear due to slip at the end portions of the surface layer and heat generation due to friction. Due to the above, it is considered that it is possible to obtain a uniform ground-contact surface at a center portion of the tread and to obtain sufficient followability even at the positions of the end portions in the width direction of the surface layer, so that the rolling resistance can be reduced and uneven wear can be suppressed. $(E^*_2/E^*_1)$ is more preferably less than 0.9 and further preferably less than 0.8.

$E^*_1$ and $E^*_2$ in the above description are values measured under the conditions of a temperature of 30°C, a frequency of 10 Hz, an initial strain of 5%, and a dynamic strain of 1% with deformation mode: stretch, and can be measured by using a viscoelasticity measurement device such as "EPLEXOR (registered trademark)" manufactured by NETZSCH-Gerätebau GmbH.

The value of the complex elastic modulus $E^*_1$ at 30°C of the surface layer of the tread portion is not particularly limited, but is preferably not less than 5 MPa, more preferably not less than 8 MPa, and further preferably not less than 9.5 MPa. On the other hand, the upper limit is also not particularly limited, but is preferably not greater than 15 MPa and more preferably not greater than 12 MPa.

The value of the complex elastic modulus $E^*_2$ at 30°C of the inner layer of the tread portion is not particularly limited, but is preferably not less than 3.0 MPa, more preferably not less than 3.5 MPa, and further preferably not less than 4 MPa. On the other hand, the upper limit is also not particularly limited, but is preferably not greater than 10 MPa, more preferably not greater than 7 MPa, and further preferably not greater than 6 MPa.

In the present invention, further, when the groove area ratio in the center region is denoted by CR (%) and the groove area ratio in the region obtained by excluding the center region from the ground-contact surface is denoted by SR (%), $|CR-SR|\leq 15$ (formula 2) is satisfied.

It is considered that by making the groove area ratio CR in the center region and the groove area ratio SR in the region obtained by excluding the center region to fall in predetermined ranges such that the groove area ratio CR and the groove area ratio SR are not significantly different from each other, even if the tread portion becomes deformed during running, the stiffness distribution in the width direction of the tread portion can be made uniform, and a stable ground-contact state can be ensured, so that the occurrence of uneven wear can be suppressed and the rolling resistance can be reduced. $|CR-SR|$ is preferably not greater than 13 and more preferably not greater than 10.

The groove area ratio CR (%) in the center region is preferably not less than 5%, more preferably not less than 7%, and further preferably not less than 10%. It is considered that by setting the groove area ratio CR (%) to be in the above range, the stiffness of the entire tread in the center region can be moderately reduced, and the tread portion can be evenly brought into contact with the ground.

On the other hand, the groove area ratio CR (%) in the center region is preferably not greater than 40%, more preferably not greater than 35%, and further preferably not greater than 30%. It is considered that if the groove area ratio CR (%) is greater than 40%, the amount of deformation in the center region is increased, and the effect of improving low fuel consumption performance is decreased.

The groove area ratio SR (%) in the region obtained by excluding the center region is preferably not less than 7%, more preferably not less than 10%, and further preferably not less than 12%. It is considered that by setting the groove area ratio SR (%) to be in the above range, good contact performance can be obtained even at each tread

shoulder portion, and the tread portion can be easily evenly brought into contact with the ground.

On the other hand, the groove area ratio SR (%) in the region obtained by excluding the center region is preferably not greater than 45%, more preferably not greater than 40%, and further preferably not greater than 35%. It is considered that if the groove area ratio SR (%) is greater than 45%, the contact performance at each shoulder portion is excessively increased, and it is difficult to obtain the effect of suppressing uneven wear.

The "groove area ratio" refers to the ratio (%) of the total area of the circumferential groove portion to the total area including the circumferential groove portion and a circumferential land portion in each region in the ground-contact surface of the tread portion.

[2] More Preferable Mode of Tire According to Present Invention

The tire according to the present invention can achieve a greater effect by taking the following mode.

1. Relationship between Complex Elastic Modulus of Base Rubber and Each Groove Area Ratio

As described above, it is considered that by making the difference between the CR and the SR fall in the predetermined range, the stiffness distribution in the tread portion can be made uniform. However, it is also considered that in the case where the difference between the CR and the SR is large, by decreasing the $E^*_2$, due to deformation of the inner layer of the tread portion, the ground contact pressure distribution of the entire tread surface can be made uniform, and uneven deformation can be suppressed. Also, it is considered that by decreasing both the difference between the CR and the SR and the $E^*_2$, the occurrence of uneven deformation of the tread portion can be suppressed, so that both reduction of rolling resistance and improvement of uneven wear resistance can be further reliably achieved.

Therefore, the present inventor has conducted experiments and studies on a preferable relationship between the $E^*_2$ and |CR-SR|, and as a result, the present inventor has found that $E^*_2 \times |CR-SR| \leq 100$ (formula 5) is preferably satisfied, and $E^*_2 \times |CR-SR| \leq 75$ (formula 6) is further preferably satisfied.

2. Relationship between Loss Tangent of Base Rubber and Each Groove Area Ratio

The loss tangent tanδ is a parameter indicating the heat generation properties of the tire, and it is considered that when the value is lower, the heat generation properties in the tread portion can be reduced and an increase in the temperature of the tire can be suppressed during running.

In particular, it is considered that in the case where the difference between the CR and the SR is large, the amount of deformation in the vicinity of the interface between a center portion and each portion obtained by excluding the center portion is increased, but the rolling resistance can be sufficiently reduced by reducing heat generation of the inner layer at this location.

Moreover, it is considered that by reducing both the difference between the CR and the SR and the tanδ, it is possible to suppress heat generation due to deformation of the inner layer of the tread portion, so that the rolling resistance can be sufficiently reduced.

Therefore, the present inventor has conducted experiments and studies on the tanδ, and as a result, the present inventor has also found that when the loss tangent at 30°C of the inner layer of the tread portion is denoted by $\tan\delta_2$, if $\tan\delta_2 \times |CR-SR| \leq 3.75$ (formula 7) is satisfied, the rolling resistance can be further reduced, and the uneven wear resistance can also be further improved. $\tan\delta_2 \times |CR-SR|$ is more preferably not greater than 3.50 and further preferably not greater than 3.25.

Similar to the above-described $E^*$, the $\tan\delta_2$ can be measured, using a viscoelasticity measurement device such as "EPLEXOR (registered trademark)" manufactured by NETZSCH-Gerätebau GmbH, under the same conditions except that the deformation mode is tension.

The tanδ at 30°C of the inner layer of the tread portion is preferably not greater than 0.25, more preferably not greater than 0.20, further preferably not greater than 0.15, and even further preferably not greater than 0.10. On the other hand, the lower limit is not particularly limited, but is preferably not less than 0.02 and more preferably not less than 0.03.

3. Belt Reinforcing Layer

The tire according to the present invention preferably includes a belt reinforcing layer on the radially inner side of the tread portion.

It is considered that by providing the belt reinforcing layer on the radially inner side of the tread portion, deformation of the tread portion due to the internal pressure can be suppressed, so that the rolling resistance can be stably reduced and the uneven wear resistance can also be improved.

Therefore, the present inventor has conducted experiments and studies on the belt reinforcing layer, and as a result, the present inventor has found that when, in the center region of the tread portion, a height Ht from the outer peripheral surface of the belt reinforcing layer to the surface of a circumferential land portion is set to be not greater than 30 mm and a height Hg from the outer peripheral surface of the belt reinforcing layer to the bottom surface of a circumferential groove is set to be not greater than 5 mm, an appropriate thickness of the entire tread portion can be ensured, so that the rolling resistance can be sufficiently reduced.
The circumferential land portion is any of land portions in the center region, and the land portion closest to the tread equator plane particularly preferably satisfies the above relationship. In addition, the circumferential groove refers to the deepest groove among the circumferential grooves adjacent to the circumferential land portion.
The height Ht from the outer peripheral surface of the belt reinforcing layer to the surface of the circumferential land portion is preferably not greater than 15 mm and more preferably not greater than 10 mm. On the other hand, the height Ht is preferably not less than 5 mm and more preferably not less than 7 mm.
The height Hg from the outer peripheral surface of the belt reinforcing layer to the bottom surface of the circumferential groove is preferably not greater than 4 mm and preferably not greater than 2 mm. On the other hand, the height Hg is preferably not less than 0.5 mm and more preferably not less than 1 mm.
It is considered that when a height h from the outer peripheral surface of the belt reinforcing layer to the boundary between the surface layer and the inner layer at the center position in the width direction of the circumferential land portion is not less than 0.5 mm, the inner layer can be reliably disposed below the land portion and deterioration of the heat generation properties can be suppressed, and further, when $h>Hg$ is satisfied, the entire tread portion can be easily deformed from the bottom surface of the land portion, and the pressure at the time of coming into contact with the ground can be made uniform. As a result, it has been found that the rolling resistance can be further reduced and the uneven wear resistance can also be further improved.
The belt reinforcing layer is preferably provided so as to extend at an angle within ±5° with respect to the tire circumferential direction. Accordingly, it is considered that deformation of the tire due to the internal pressure can be prevented, so that it is possible to obtain a uniform contact pressure distribution. Thus, it is considered that the rolling resistance can be reduced and the uneven wear resistance can also be improved.

4. Sipes

In the tire according to the present invention, preferably, sipes are formed on two or more land portions demarcated by two or more circumferential main grooves provided on the tread portion, and the directions of the sipes in the adjacent land portions out of these land portions, with respect to the tire circumferential direction, are opposite to each other.
It is considered that by providing such sipes, the contact performance can also be improved at the tread land portion surface, and the movement of the tread land portions can be minimized, so that the rolling resistance can be further reduced. It is also considered that since the directions of the adjacent sipes are different from each other, forces acting perpendicular to the sipe directions cancel each other in the width direction, and only the components in the circumferential direction can be left, so that wear of the land portions can be easily made uniform.
The sipes refer to narrow grooves having a groove width of less than 2 mm, and may be open in the circumferential grooves or may not necessarily be open in the circumferential grooves.

5. Ratio of Groove Area in Ground-Contact Width of Tread Portion

In the tire according to the present invention, the ratio of the total groove area to the total area in the ground-contact width of the tread portion is preferably 20 to 40%.
It is considered that by setting the ratio of the total groove area to the total area in the ground-contact width of the tread portion to be not less than 20% and not greater than 40% as described above, sufficient heat dissipation from the grooves can be ensured, and appropriate stiffness of the entire tread portion can be ensured, so that the rolling resistance can be reduced and the uneven wear resistance can also be improved.
The "total groove area" refers to the total of the areas of the circumferential grooves and grooves in the width direction such as the sipes, and the sum of the "total groove area" and the areas of all the land portions is the "total area".
The ratio of the total groove area is more preferably not less than 25% and further preferably not less than 27%. On the other hand, the upper limit thereof is more preferably not greater than 38% and further preferably not greater than 35%.

[3] Specific Embodiment of Present Invention

Hereinafter, the present invention will be specifically described based on an embodiment.

1. Rubber Composition

In the present embodiment, any of various blending materials described below can be used for a tread rubber including a surface layer and an inner layer, and the tread rubber can be obtained by adjusting the blending amount of each material as appropriate according to the desired physical properties of the surface layer and the inner layer.

(1) Blending Material

(a) Rubber Component

In the present embodiment, as a rubber component, rubbers (polymers) generally used in the production of tires, such as a butadiene rubber (BR), a styrene-butadiene rubber (SBR), an isoprene-based rubber, and a nitrile rubber (NBR), can be used. These rubbers may be used individually, or two or more of these rubbers may be used in combination.

The tread rubber preferably contains an isoprene-based rubber, a BR, or an SBR, and an isoprene-based rubber and a BR, a BR and an SBR, or an SBR and an isoprene-based rubber are more preferably used in combination for the tread rubber, and an isoprene-based rubber, a BR, and an SBR may be used in combination for the tread rubber.

(I) BR

The amount of the BR in 100 parts by mass of the rubber component is preferably not less than 5 parts by mass, more preferably not less than 10 parts by mass, and further preferably not less than 15 parts by mass. On the other hand, the amount of the BR is preferably not greater than 40 parts by mass, more preferably not greater than 35 parts by mass, and further preferably not greater than 30 parts by mass.

The weight-average molecular weight of the BR is, for example, greater than 100 thousand and less than 2 million. The vinyl bond content of the BR is, for example, greater than 1% by mass and less than 30% by mass. The cis content of the BR is, for example, greater than 1% by mass and not greater than 98% by mass. The trans content of the BR is, for example, greater than 1% by mass and less than 60% by mass. The cis content can be measured by infrared absorption spectrometry.

The BR is not particularly limited, and a BR having a high cis content (a cis content of 90% or higher), a BR having a low cis content, a BR containing syndiotactic polybutadiene crystals, etc., can be used. The BR may be either an unmodified BR or a modified BR, and, for example, a BR modified with a compound (modifier) represented by the following formula can be used as the modified BR.

[Chem. 1]

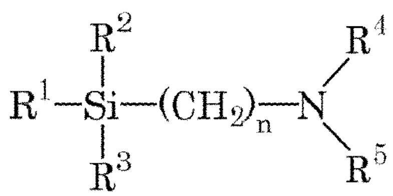

In the formula, $R^1$, $R^2$, and $R^3$ are the same or different from each other, and each represent an alkyl group, an alkoxy group, a silyloxy group, an acetal group, a carboxyl group (-COOH), a mercapto group (-SH), or a derivative thereof. $R^4$ and $R^5$ are the same or different from each other, and each represent a hydrogen atom or an alkyl group. $R^4$ and $R^5$ may be linked together to form a ring structure together with a nitrogen atom. "n" represents an integer.

An example of the modified BR modified with the compound (modifier) represented by the above formula is a BR obtained by modifying polymerization terminals (active terminals) with the compound represented by the above formula.

As $R^1$, $R^2$, and $R^3$, an alkoxy group is suitable (an alkoxy group preferably having 1 to 8 carbon atoms, more preferably 1 to 4 carbon atoms). As $R^4$ and $R^5$, an alkyl group (preferably, an alkyl group having 1 to 3 carbon atoms) is suitable. The integer "n" is preferably 1 to 5, more preferably 2 to 4, and further preferably 3. In addition, when $R^4$ and $R^5$ are linked together to form a ring structure together with the nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These compounds may be used individually, or two or more of these compounds may be used in combination.

As the modified BR, a modified BR modified with the following compound (modifier) can also be used. Examples of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3,-bisaminomethylcyclohexane; amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane; sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide; N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover, N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Modification with the above compounds (modifiers) can be carried out by a known method. These modified BRs may be used individually, or two or more of these modified BRs may be used in combination.

As the BR, for example, products of Ube Industries, Ltd., JSR Corporation, Asahi Kasei Corporation, Zeon Corporation, etc., can be used.

(II) Isoprene-Based Rubber

The amount (total amount) of the isoprene-based rubber in 100 parts by mass of the rubber component is preferably not less than 25 parts by mass, more preferably not less than 30 parts by mass, and further preferably not less than 35 parts by mass. On the other hand, the amount (total amount) of the isoprene-based rubber is preferably not greater than 55 parts by mass, more preferably not greater than 50 parts by mass, and further preferably not greater than 45 parts by mass.

Examples of specific isoprene-based rubbers include natural rubber (NR), isoprene rubber (IR), reformed NR, modified NR, and modified IR, and NR is preferable since NR has excellent strength.

As the NR, for example, NRs that are generally used in the tire industry, such as SIR20, RSS#3, and TSR20, can be used. The IR is not particularly limited, and, as the IR, for example, IRs that are generally used in the tire industry, such as IR2200 manufactured by Zeon Corporation, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination.

(III) SBR

The rubber component may contain an SBR as necessary. In this case, the amount of the SBR in 100 parts by mass of the rubber component is, for example, not less than 20 parts by mass and not greater than 100 parts by mass. The amount of the SBR is more preferably greater than 25 parts by mass and further preferably greater than 30 parts by mass. On the other hand, the amount of the SBR is preferably less than 65 parts by mass, more preferably less than 55 parts by mass, further preferably less than 45 parts by mass, and particularly preferably less than 35 parts by mass.

The weight-average molecular weight of the SBR is, for example, greater than 100 thousand and less than 2 million. The styrene content of the SBR is, for example, preferably greater than 5% by mass and less than 50% by mass, more preferably greater than 10% by mass and less than 40% by mass, and further preferably greater than 20% by mass and less than 35% by mass. The vinyl bond content (1,2-bond butadiene unit content) of the SBR is, for example, greater than 5% by mass and less than 70% by mass. SBR structure identification (measurement of styrene content and vinyl bond content) can be performed by using, for example, a JNM-ECA series device manufactured by JEOL Ltd.

The SBR is not particularly limited, and, for example, an emulsion-polymerized styrene-butadiene rubber (E-SBR), a solution-polymerized styrene-butadiene rubber (S-SBR), etc., can be used. The SBR may either be an unmodified SBR or a modified SBR, and these SBRs may be used individually, or two or more of these SBRs may be used in combination.

The modified SBR only has to be an SBR having a functional group that interacts with a filler such as silica, and examples of such a modified SBR include a terminal-modified SBR obtained by modifying at least one terminal of an SBR with a compound (modifier) having the functional group (a terminal-modified SBR having the functional group at a terminal thereof), a main chain-modified SBR having the functional group in the main chain thereof, a main chain/terminal-modified SBR having the functional group in the main chain and at a terminal thereof (for example, a main chain/terminal-modified SBR that has the functional group in the main chain thereof and in which at least one terminal thereof is modified with the modifier), and a terminal-modified SBR that is modified (coupled) by using a multifunctional compound having two or more epoxy groups in the molecule thereof and to which a hydroxyl group or an epoxy group is introduced.

As the SBR, for example, SBRs manufactured by and available from SUMITOMO CHEMICAL COMPANY, LIMITED, JSR Corporation, Asahi Kasei Corporation, Zeon Corporation, etc., can be used. These SBRs may be used individually, or two or more of these SBRs may be used in combination.

(IV) Other Rubber Component

As another rubber component, a rubber (polymer) generally used in the production of tires, such as nitrile rubber (NBR), may be included.

(b) Blending Materials Other Than Rubber Component

(I) Filler

In the present embodiment, the rubber composition preferably contains carbon black, silica, and the like, which are reinforcing agents, as a filler. Examples of the filler include calcium carbonate, talc, alumina, clay, aluminum hydroxide, mica, etc., in addition to the above-described carbon black and silica. In the case where silica is used, the silica is preferably used in combination with a silane coupling agent.

(i) Carbon Black

The amount of the carbon black per 100 parts by mass of the rubber component is, for example, preferably not less than 2 parts by mass, more preferably not less than 3 parts by mass, further preferably not less than 8 parts by mass, and particularly preferably not less than 10 parts by mass. On the other hand, the amount of the carbon black is preferably not greater than 100 parts by mass, more preferably not greater than 50 parts by mass, and further preferably not greater than 40 parts by mass. Accordingly, it is possible to maintain wear resistance and suppress uneven wear while reducing the rolling resistance of the tire.

The nitrogen adsorption specific surface area ($N_2SA$) of the carbon black is, for example, greater than 30 $m^2/g$ and less than 250 $m^2/g$. The dibutyl phthalate (DBP) absorption amount of the carbon black is, for example, greater than 50 ml/100 g and less than 250 ml/100 g. The nitrogen adsorption specific surface area of the carbon black is measured according to ASTM D4820-93, and the DBP absorption amount of the carbon black is measured according to ASTM D2414-93.

The carbon black is not particularly limited, and examples of the carbon black include: furnace black (furnace carbon black) such as SAF, ISAF, HAF, MAP, FEF, SRF, GPF, APF, FF, CF, SCF, and ECF; acetylene black (acetylene

carbon black); thermal black (thermal carbon black) such as FT and MT; channel black (channel carbon black) such as EPC, MPC, and CC; and graphite.

As commercially available products, products of Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon Co., etc., can be used, and one of these carbon blacks may be used alone, or two or more of these carbon blacks may be used in combination.

(ii) Silica

The rubber composition may further contain silica as necessary. From the viewpoint of obtaining good durability, the BET specific surface area of the silica is preferably greater than 140 $m^2/g$ and more preferably greater than 160 $m^2/g$. On the other hand, from the viewpoint of obtaining good rolling resistance during high speed running, the BET specific surface area of the silica is preferably less than 250 $m^2/g$ and more preferably less than 220 $m^2/g$. In addition, from the viewpoint of obtaining good durability, the amount of the silica per 100 parts by mass of the rubber component is preferably greater than 35 parts by mass, more preferably greater than 40 parts by mass, further preferably greater than 45 parts by mass, and particularly preferably not less than 50 parts by mass. On the other hand, from the viewpoint of obtaining good rolling resistance, the amount of the silica is preferably less than 150 parts by mass, more preferably less than 100 parts by mass, and further preferably less than 70 parts by mass. The above BET specific surface area is a value of $N_2SA$ measured by the BET method according to ASTM D3037-93.

Examples of the silica include dry-process silica (anhydrous silica) and wet-process silica (hydrous silica). Between them, wet-process silica is preferable for the reason that it has a higher silanol group content.

As the silica, for example, products of Evonik Industries Ag, Rhodia, Tosoh Silica Corporation, Solvay Japan, Ltd., Tokuyama Corporation, etc., can be used.

(iii) Silane Coupling Agent

In the case where silica is used as a filler, a silane coupling agent is preferably contained together with the silica as described above. The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive Performance Materials, Inc.; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used individually, or two or more of these silane coupling agents may be used in combination.

As the silane coupling agent, for example, products of Evonik Industries Ag, Momentive Performance Materials, Inc., Shin-Etsu Silicones, Tokyo Chemical Industry Co., Ltd., AZmax.co, Dow Corning Toray Co., Ltd., etc., can be used.

The amount of the silane coupling agent per 100 parts by mass of the silica is, for example, greater than 3 parts by mass and less than 25 parts by mass.

(iv) Other Filler

The rubber composition may further contain fillers generally used in the tire industry, such as calcium carbonate, talc, alumina, clay, aluminum hydroxide, and mica, in addition to the above-described carbon black and silica. The amount of each of these fillers per 100 parts by mass of the rubber component is, for example, greater than 0.1 parts by mass and less than 200 parts by mass.

(II) Softener

The rubber composition may contain softeners such as an oil (including extender oil), a liquid rubber, and a resin component. The total amount of these softeners per 100 parts by mass of the rubber component is, for example, preferably greater than 5 parts by mass, more preferably greater than 10 parts by mass, and further preferably greater

than 12 parts by mass. In addition, the total amount of these softeners is preferably less than 50 parts by mass, more preferably less than 35 parts by mass, and further preferably less than 20 parts by mass. The amount of the oil incudes the amount of oil included in rubber (oil-extended rubber).

(i) Oil

Examples of the oil include mineral oils which are generally called process oils, vegetable fats and oils, and mixtures thereof. As the process oil (mineral oil), for example, paraffinic process oil, aromatic process oil, naphthenic process oil, or the like can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. These oils may be used individually, or two or more of these oils may be used in combination.

As the process oil (mineral oil), for example, products of Idemitsu Kosan Co., Ltd., Sankyo Yuka Kogyo K.K., ENEOS Corporation, Olisoy, H&R, Hokoku Corporation, Showa Shell Sekiyu K.K., FUJI KOSAN COMPANY, LTD., etc., can be used.

(ii) Liquid rubber

The liquid rubber described as a softener is a polymer in a liquid state at room temperature (25°C), and is a polymer having a monomer similar to that of a solid rubber, as a component. Examples of the liquid rubber include a farnesene-based polymer, a liquid diene-based polymer, and hydrogenated products thereof.

The farnesene-based polymer is a polymer obtained by polymerizing farnesene, and has a structural unit based on farnesene. As farnesene, there are isomers such as α-farnesene ((3E,7E)-3,7,11-trimethyl-1,3,6,10-dodecatetraene) and β-farnesene (7,11-dimethyl-3-methylene-1,6,10-dodecatriene).

The farnesene-based polymer may be a homopolymer of farnesene (farnesene homopolymer), or a copolymer of farnesene and a vinyl monomer (farnesene-vinyl monomer copolymer).

Examples of the liquid diene-based polymer include liquid styrene-butadiene copolymers (liquid SBRs), liquid butadiene polymers (liquid BRs), liquid isoprene polymers (liquid IRs), and liquid styrene-isoprene copolymers (liquid SIRs).

The liquid diene-based polymer is, for example, a polymer having a weight-average molecular weight (Mw), of greater than $1.0\times10^3$ and less than $2.0\times10^5$, measured by gel permeation chromatography (GPC) in terms of polystyrene. In the present description, the Mw of the liquid diene-based polymer is a value that is measured by gel permeation chromatography (GPC) and obtained by polystyrene conversion.

As the liquid rubber, for example, products of KURARAY CO., LTD., Cray Valley, etc., can be used.

(iii) Resin component

The rubber composition preferably contains, for example, a resin, such as styrene-based resins, coumarone-based resins, terpene-based resins, C5 resins, C9 resins, C5C9 resins, and acrylic-based resins, as a resin component as necessary. These resin components may be solid or liquid at room temperature, and two or more of these resin components may be used in combination. The amount of the resin component per 100 parts by mass of the rubber component is preferably greater than 2 parts by mass and less than 45 parts by mass, and more preferably less than 30 parts by mass.

The styrene-based resins are each a polymer for which a styrene-based monomer is used as a constituent monomer, and examples of the styrene-based resins include a polymer obtained by polymerization with a styrene-based monomer as a main component (not less than 50% by mass). Specific examples of the styrene-based resins include homopolymers obtained by individually polymerizing styrene-based monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers each obtained by copolymerizing two or more styrene-based monomers, and copolymers of styrene-based monomers and other monomers that can be copolymerized with styrene-based monomers.

Examples of the other monomers include: acrylonitriles such as acrylonitrile and methacrylonitrile; acrylics; unsaturated carboxylic acids such as methacrylic acid; unsaturated carboxylic acid esters such as methyl acrylate and methyl methacrylate; dienes such as chloroprene and butadiene isoprene; olefins such as 1-butene and 1-pentene; α, β-unsaturated carboxylic acids or acid anhydrides thereof such as maleic anhydride; and the like.

Among the coumarone-based resins, coumarone-indene resins are preferable. The coumarone-indene resins are each a resin containing coumarone and indene as monomer components that form the skeleton (main chain) of the resin. Examples of the monomer components contained in the skeleton other than coumarone and indene include

styrene, α-methylstyrene, methylindene, and vinyltoluene.

The amount of the coumarone-indene resin per 100 parts by mass of the rubber component is, for example, greater than 1.0 part by mass and less than 50.0 parts by mass.

The hydroxyl value (OH value) of the coumarone-indene resin is, for example, greater than 15 mg KOH/g and less than 150 mg KOH/g. The OH value is represented, in milligram, as an amount of potassium hydroxide that is required to neutralize acetic acid bound to hydroxyl groups when 1 g of the resin is acetylated, and is a value measured by the potentiometric titration (JIS K0070: 1992).

The softening point of the coumarone-indene resin is, for example, higher than 30°C and lower than 160°C. The softening point is a softening point that is measured with a ring and ball softening point measuring device according to JIS K6220-1: 2001 and that is a temperature at which a ball has descended.

Examples of the terpene-based resins include polyterpenes, terpene phenols, and aromatic modified terpene resins. The polyterpenes are resins obtained by polymerizing terpene compounds, and hydrogenated products thereof. The above terpene compounds are hydrocarbons represented by a composition of $(C_5H_8)_n$ and oxygenated derivatives thereof, and are compounds having, as a basic backbone, a terpene classified into monoterpene ($C_{10}H_{16}$), sesquiterpene ($C_{15}H_{24}$), diterpene ($C_{20}H_{32}$), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpenes include terpene resins formed from the above-described terpene compounds such as α-pinene resin, β-pinene resin, limonene resin, dipentene resin, and β-pinene-limonene resin, and hydrogenated terpene resins obtained by hydrogenating the terpene resins. Examples of the terpene phenols include resins obtained by copolymerization of the above terpene compound and a phenolic compound, and resins obtained by hydrogenating the resins, and specific examples of the terpene phenols include resins obtained by condensation of the above terpene compound, a phenolic compound, and formalin. Examples of the phenolic compounds include phenol, bisphenol A, cresol, and xylenol. Examples of the aromatic modified terpene resins include resins obtained by modifying a terpene resin with an aromatic compound, and resins obtained by hydrogenating the resins. Here, the aromatic compound is not particularly limited as long as the aromatic compound is a compound having an aromatic ring. Examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone; and indene.

The "C5 resins" refer to resins obtained by polymerizing a C5 fraction. Examples of the C5 fraction include petroleum fractions having 4 to 5 carbon atoms such as cyclopentadiene, pentene, pentadiene, and isoprene. As the C5 resins, dicyclopentadiene resins (DCPD resins) are suitably used.

The "C9 resins" refer to resins obtained by polymerizing a C9 fraction, and may be hydrogenated or modified products of the resins. Examples of the C9 fraction include petroleum fractions having 8 to 10 carbon atoms such as vinyltoluene, alkylstyrene, indene, and methylindene. As specific examples of the C9 resins, coumarone-indene resins, coumarone resins, indene resins, and aromatic vinyl-based resins are suitably used. As the aromatic vinyl-based resin, a homopolymer of α-methylstyrene or styrene or a copolymer of α-methylstyrene and styrene is preferable, and a copolymer of α-methylstyrene and styrene is more preferable, for the reason that the polymer is economic, is easily processed, and has excellent heat generation properties. As the aromatic vinyl-based resins, for example, products commercially available from Kraton Corporation, Eastman Chemical Company, etc., can be used.

The "C5C9 resins" refer to resins obtained by copolymerizing the C5 fraction and the C9 fraction, and may be hydrogenated or modified products of the resins. Examples of the C5 fraction and the C9 fraction include the above-described petroleum fractions. As the C5C9 resins, for example, products commercially available from Tosoh Corporation, Zibo Luhua Hongjin New Material Co., Ltd., etc., can be used.

The acrylic-based resins are not particularly limited, but, for example, a non-solvent type acrylic-based resin can be used.

An example of the non-solvent type acrylic-based resin is a (meth)acrylic-based resin (polymer) synthesized by a high-temperature continuous polymerization method (high-temperature continuous bulk polymerization method) (the methods disclosed in US Patent No. 4,414,370, Japanese Laid-Open Patent Publication No. S59-6207, Japanese Examined Patent Publication No. H5-58005, Japanese Laid-Open Patent Publication No. H1-313522, US Patent No. 5,010,166, annual research report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present invention, (meth)acrylic means methacrylic and acrylic.

Examples of the monomer component that forms the acrylic-based resin include (meth)acrylic acids, (meth)acrylic acid esters (alkyl esters, aryl esters, aralkyl esters, etc.), (meth)acrylamide, and (meth)acrylic acid derivatives such as (meth)acrylamide derivatives.

Moreover, as the monomer component that forms the acrylic-based resin, an aromatic vinyl such as styrene,

α-methylstyrene, vinyltoluene, vinylnaphthalene, divinylbenzene, trivinylbenzene, and divinylnaphthalene may be used together with (meth)acrylic acid or a (meth)acrylic acid derivative.

The acrylic-based resin may be a resin composed of only a (meth)acrylic component, or may be a resin also containing a component other than the (meth)acrylic component. In addition, the acrylic-based resin may have a hydroxyl group, a carboxyl group, a silanol group, or the like.

As the resin component, for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., etc., can be used.

(III) Curable Resin Component

The rubber composition preferably contains a curable resin component as necessary. The amount of the curable resin component per 100 parts by mass of the rubber component is, for example, preferably not less than 4 parts by mass and more preferably not less than 6 parts by mass. On the other hand, the amount of the curable resin component is preferably not greater than 30 parts by mass and more preferably not greater than 20 parts by mass.

Examples of the curable resin component include modified resorcinol resins and modified phenol resins. Examples of specific modified resorcinol resins include SUMIKANOL 620 (modified resorcinol resin) manufactured by Taoka Chemical Co., Ltd., and examples of the modified phenol resins include PR12686 (cashew oil-modified phenol resin) manufactured by Sumitomo Bakelite Co., Ltd.

When a modified resorcinol resin is used, a methylene donor is preferably contained as a curing agent in combination as necessary. Examples of the methylene donor include hexamethylenetetramine (HMT), hexamethoxy methylol melamine (HMMM), and hexamethylol melamine pentamethyl ether (HMMPME), and the methylene donor is preferably contained, for example, in an amount of not less than 5 parts by mass and not greater than 15 parts by mass per 100 parts by mass of the curable resin component.

As a specific methylene donor, for example, SUMIKANOL 507 manufactured by Taoka Chemical Co., Ltd., etc., can be used.

(IV) Antioxidant

The rubber composition preferably contains an antioxidant. The amount of the antioxidant per 100 parts by mass of the rubber component is, for example, greater than 1 part by mass and less than 10 parts by mass.

Examples of the antioxidant include: naphthylamine-based antioxidants such as phenyl-α-naphthylamine; diphenylamine-based antioxidants such as octylated diphenylamine and 4,4'-bis(α,α'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. These antioxidants may be used individually, or two or more of these antioxidants may be used in combination.

As the antioxidant, for example, products of Seiko Chemical Co., Ltd., SUMITOMO CHEMICAL COMPANY, LIMITED, Ouchi Shinko Chemical Industrial Co., Ltd., Flexsys, etc., can be used.

(V) Stearic Acid

The rubber composition may contain stearic acid. The amount of the stearic acid per 100 parts by mass of the rubber component is, for example, greater than 0.5 parts by mass and less than 10.0 parts by mass. As the stearic acid, a conventionally known one can be used, and, for example, products of NOF Corporation, Kao Corporation, FUJIFILM Wako Pure Chemical Industries, Ltd., New Japan Chemical Co., Ltd., etc., can be used.

(VI) Zinc Oxide

The rubber composition may contain zinc oxide. The amount of the zinc oxide per 100 parts by mass of the rubber component is, for example, greater than 0.5 parts by mass and less than 10 parts by mass. As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

(VII) Wax

The rubber composition preferably contains a wax. The amount of the wax per 100 parts by mass of the rubber component is, for example, 0.5 to 20 parts by mass, preferably 1.0 to 15 parts by mass, and more preferably 1.5 to 10 parts by mass.

The wax is not particularly limited, and examples of the wax include: petroleum waxes such as paraffin wax and microcrystalline wax; natural waxes such as vegetable wax and animal wax; and synthesized waxes such as polymers of ethylene, propylene, and the like. These waxes may be used individually, or two or more of these waxes may be used in combination.

As the wax, for example, products of Ouchi Shinko Chemical Industrial Co., Ltd., NIPPON SEIRO CO., LTD., Seiko Chemical Co., Ltd., etc., can be used.

(VIII) Crosslinking Agent and Vulcanization Accelerator

The rubber composition preferably contains a crosslinking agent such as sulfur. The amount of the crosslinking agent per 100 parts by mass of the rubber component is, for example, greater than 0.1 parts by mass and less than 10.0 parts by mass.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, for example, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

Examples of crosslinking agents other than sulfur include: vulcanizing agents containing a sulfur atom such as TACKIROL V-200 manufactured by Taoka Chemical Co., Ltd., DURALINK HTS (1,6-hexamethylene sodium dithiosulfate dihydrate) manufactured by Flexsys, and KA9188 (1,6-bis(N,N'-dibenzylthiocarbamoyldithio)hexane: hybrid crosslinking agent) manufactured by LANXESS; and organic peroxides such as dicumyl peroxide.

The rubber composition preferably contains a vulcanization accelerator. The amount of the vulcanization accelerator per 100 parts by mass of the rubber component is, for example, greater than 0.3 parts by mass and less than 10.0 parts by mass.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination.

(IX) Others

In addition to the above-described components, additives generally used in the tire industry, such as fatty acid metal salts, carboxylic acid metal salts, and organic peroxides, may be further blended in the rubber composition. The amount of each of these additives per 100 parts by mass of the rubber component is, for example, greater than 0.1 parts by mass and less than 200 parts by mass.

(2) Production of Rubber Composition

The rubber composition for forming the tread rubber is produced by a general method; for example, a production method including a base kneading step of kneading a rubber component and a filler such as carbon black and a finish kneading step of kneading a crosslinking agent and a kneaded product obtained in the base kneading step.

The kneading can be performed by using, for example, a known (sealed type) kneading machine such as a Banbury mixer, a kneader, and an open roll.

In the base kneading step, the kneading temperature is, for example, higher than 50°C and lower than 200°C, and the kneading time is, for example, longer than 30 seconds and shorter than 30 minutes. In the base kneading step, in addition to the above components, ingredients that are conventionally used in the rubber industry, for example, a softener such as oil, stearic acid, zinc oxide, an antioxidant, a wax, a vulcanization accelerator, etc., may be added and kneaded as necessary.

In the finish kneading step, the crosslinking agent and the kneaded product obtained in the base kneading step are kneaded. In the finish kneading step, the kneading temperature is, for example, higher than room temperature and lower than 80°C, and the kneading time is, for example, longer than 1 minute and shorter than 15 minutes. In the finish kneading step, in addition to the above components, a vulcanization accelerator, zinc oxide, etc., may be added and kneaded as necessary.

2. Production of Tire

A tire according to the present embodiment is produced by a normal method using each unvulcanized rubber composition obtained through the finish kneading step. That is, first, an unvulcanized tire is produced, using each unvulcanized rubber composition, by performing extrusion into the shape of a tread rubber including a surface layer and an inner layer, and shaping the extruded rubber composition together with other tire members on a tire shaping machine by a normal method.

Specifically, an unvulcanized tire is produced by winding, on a shaping drum, an inner liner as a member for ensuring the airtightness of the tire, a carcass as a member for withstanding the load, impact, and filling air pressure received by the tire, a belt as a member for strongly tightening the carcass to increase the stiffness of a tread, etc., placing bead portions as members for fixing both ends of the carcass to both side edge portions and fixing the tire to a rim, shaping these members into a toroid shape, then attaching a tread rubber to a center portion of the outer periphery, and attaching side portions (sidewalls and clinch portions) as members for protecting the carcass to withstand bending, on the radially outer side.

Thereafter, a tire is obtained by heating and pressurizing the produced unvulcanized tire in a vulcanizing machine. The vulcanization step can be carried out by applying known vulcanization means. The vulcanization temperature is, for example, higher than 120°C and lower than 200°C, and the vulcanization time is, for example, longer than 5 minutes and shorter than 15 minutes.

The tire according to the present embodiment is particularly preferably applied to pneumatic tires for a passenger car, and can more preferably contribute to solving the problem, in the present invention, of providing a pneumatic tire that achieves both reduction of rolling resistance and improvement of uneven wear resistance.

EXAMPLES

Hereinafter, the present invention will be further specifically described by means of examples. In the following, as the tread rubber, a tread rubber having a two-layer structure including a surface layer and an inner layer was used.

1. Production of Rubber Compositions for Producing Tread

Prior to production of a tire, first, rubber compositions for producing a surface layer and an inner layer, that is, a first rubber composition as a rubber composition for producing a surface layer and a second rubber composition as a rubber composition for producing an inner layer were produced.

(1) Blending Materials

First, each blending material described below was prepared.

(a) Rubber Component

(I) NR: TSR20
(II) BR-1: UBEPOL-BR150B manufactured by Ube Industries, Ltd. (cis content: 97% by mass)
(III) BR-2: Nipol-BR1250H manufactured by Zeon Corporation (tin terminal-modified BR, cis content: 40% by mass)
(IV) BR-3: UBEPOL VCR617 manufactured by Ube Industries, Ltd. (cis content: 98% by mass)
(V) SBR: Europrene SOL R C2525 manufactured by Versalis S.p.A. (styrene content: 26% by mass, vinyl bond content: 24% by mass)

(b) Blending Materials Other Than Rubber Component

(I) Carbon black: SHOBLACK N330T manufactured by Cabot Japan K.K. (DBP absorption amount: 104 ml/100 g)
(II) Silica: ULTRASII, VN3 manufactured by Evonik Industries Ag
(III) Silane coupling agent: Si363 manufactured by Evonik Industries Ag

(IV) Resin component-1: terpene styrene resin TO125 manufactured by Yasuhara Chemical Co., Ltd. (aromatic modified terpene resin)
(V) Resin component-2: PR12686 manufactured by Sumitomo Bakelite Co., Ltd. (cashew oil-modified phenol resin)
(VI) Curing agent: SUMIKANOL 507 manufactured by Taoka Chemical Co., Ltd.
(VII) Oil: Process X-140 manufactured by ENEOS Corporation
(VIII) Stearic acid: stearic acid "Camellia" manufactured by NOF Corporation
(IV) Zinc oxide: Zinc Oxide Type-1 manufactured by Mitsui Mining & Smelting Co., Ltd.
(X) Wax: SUNNOC WAX manufactured by Ouchi Shinko Chemical Industrial Co., Ltd.
(XI) Antioxidant-1: NOCRAC 6C manufactured by Ouchi Shinko Chemical Industrial Co., Ltd. (N-phenyl-N'-(1,3-dimethylbutyl)-p-phenylenediamine)
(XII) Antioxidant-2: ANTAGE RD manufactured by Kawaguchi Chemical Industry Co., Ltd. (2,2,4-trimethyl-1,2-dihydroquinoline)
(XIII) Crosslinking agent and vulcanization accelerator

Sulfur: powdery sulfur manufactured by Tsurumi Chemical Industry Co., Ltd.
Vulcanization accelerator-1: NOCCELER NS manufactured by Ouchi Shinko Chemical Industrial Co., Ltd. (N-tert-butyl-2-benzothiazolyl sulfenamide)
Vulcanization accelerator-2: NOCCELER CZ-G (CZ) manufactured by Ouchi Shinko Chemical Industrial Co., Ltd. (N-cyclohexyl-2-benzothiazolyl sulfenamide)
Vulcanization accelerator-3: NOCCELER D (DPG) manufactured by Ouchi Shinko Chemical Industrial Co., Ltd. (1,3-diphenylguanidine)

(2) Production of Rubber Composition

A first rubber composition and a second rubber composition were obtained by kneading the materials other than the sulfur and the vulcanization accelerator under a condition of 150°C for 5 minutes by using a Banbury mixer in accordance with a blending formula shown in Table 1 and a blending formula shown in Table 2, respectively, to obtain a kneaded product, then adding the sulfur and the vulcanization accelerator, and kneading the mixture under a condition of 80°C for 5 minutes using an open roll. The blending amount of each material is in parts by mass.

[Table 1]

| Blending formula | A | B | C | D | E |
|---|---|---|---|---|---|
| BR-1 | 15 | 10 | 20 | 15 | 5 |
| SBR | 85 | 90 | 80 | 85 | 65 |
| NR | | | | | 30 |
| Carbon black | 5 | 5 | 5 | 5 | 5 |
| Silica | 80 | 80 | 80 | 70 | 70 |
| Silane coupling agent | 8 | 8 | 8 | 7 | 7 |
| Resin component-1 | 3 | 3 | 3 | 3 | 3 |
| Oil | 5 | 5 | 5 | 5 | 5 |
| Stearic acid | 2 | 2 | 2 | 2 | 2 |
| Zinc oxide | 2 | 2 | 2 | 2 | 2 |
| Wax | 2 | 2 | 2 | 2 | 2 |
| Antioxidant-1 | 2 | 2 | 2 | 2 | 2 |
| Sulfur | 1.5 | 1.5 | 1.5 | 1.5 | 1.5 |
| Vulcanization accelerator-1 | 1.5 | 1.5 | 1.5 | 1.5 | 1.5 |
| Vulcanization accelerator-3 | 1 | 1 | 1 | 1 | 1 |

(continued)

| Blending formula | A | B | C | D | E |
|---|---|---|---|---|---|
| $E^*_1$ (MPa) | 9.6 | 10.0 | 9.1 | 7.5 | 7.7 |

[Table 2]

| Blending formula | a | b | c | d | e |
|---|---|---|---|---|---|
| NR | 70 | 60 | 60 | 60 | 60 |
| BR-1 | 30 | | | 20 | |
| BR-2 | | 20 | 20 | | 20 |
| BR-3 | | 20 | 20 | 20 | 20 |
| Carbon black | 35 | 40 | 30 | 30 | 20 |
| Silica | | | 15 | 15 | 30 |
| Silane coupling agent | | | 1.2 | 1.2 | 2.4 |
| Resin component-2 | | 10 | 15 | 10 | 10 |
| Curing agent | | 3 | 5 | 3 | 3 |
| Stearic acid | 2 | 2 | 2 | 2 | 2 |
| Zinc oxide | 4 | 5 | 5 | 5 | 5 |
| Wax | 2 | 2 | 2 | 2 | 2 |
| Antioxidant-1 | 3 | 3 | 3 | 3 | 3 |
| Antioxidant-2 | 1 | 1 | 1 | 1 | 1 |
| Sulfur | 1.7 | 2.8 | 2.8 | 2.8 | 2.8 |
| Vulcanization accelerator-2 | 1.2 | 1.5 | 1.5 | 1.5 | 1.5 |
| Vulcanization accelerator-3 | | 1 | 1 | 1 | 1 |
| $E^*_2$ (MPa) | 4.8 | 6.5 | 7.7 | 6.5 | 5.5 |
| $\tan\delta_2$ | 0.07 | 0.06 | 0.07 | 0.05 | 0.10 |

2. Production of Tire

A tread portion formed from a tread rubber having a two-layer structure was produced with each combination shown in Table 3 or Table 4 using the first rubber composition obtained above as a surface layer and the second rubber composition obtained above as an inner layer, and was attached together with other tire members to form an unvulcanized tire, and the unvulcanized tire was press-vulcanized under a condition of 170°C for 10 minutes, to produce each test tire having a size of 175/55R20 type (Example 1 to Example 7 and Comparative Example 1 to Comparative Example 6).

In producing each test tire, the tread portion and each sidewall portion were placed such that an outer portion of the sidewall portion was overlapped on the outer side of an end portion in the tire width direction of the tread portion and each end portion in the width direction of the inner layer of the tread portion was located in a part of the interface between the surface layer of the tread portion and the sidewall.

In each test tire, a belt reinforcing layer was placed on the radially inner side of the tread portion. Specifically, the gauges of the surface layer and the inner layer were adjusted such that, in a center region of the tread portion, a height Ht from the outer peripheral surface of the belt reinforcing layer to the surface of a circumferential land portion was 8.5 mm, and a height h from the outer peripheral surface of the belt reinforcing layer at the center position in the width direction of the circumferential land portion to the boundary between the outermost rubber of the tread portion and the rubber located in the interface was 3 mm.

In each test tire, three circumferential grooves were provided. At this time, each groove depth was adjusted such that a height Hg from the outer peripheral surface of the belt reinforcing layer to the bottom surface of the main groove was 1.5 mm. In addition, for each test tire, a groove area ratio CR in the center region and a groove area ratio

SR in a region obtained by excluding the center region were adjusted by changing the groove width. Moreover, the center positions and the depths of the grooves were made the same. Furthermore, sipes were formed such that the directions of the sipes in adjacent land portions out of a center land portion and shoulder land portions demarcated by the circumferential grooves, with respect to the tire circumferential direction, were opposite to each other.

Moreover, the ratio of the total groove area to the total area in the ground-contact width of the tread portion was set to 30%.

3. Calculation of Parameters

Thereafter, rubber test pieces for viscoelasticity measurement were produced by cutting the surface layer and the inner layer of the tread portion of each test tire into pieces with a length of 20 mm, a width of 4 mm, and a thickness of 2 mm such that the direction of long sides was the tire circumferential direction. For each rubber test piece, the complex elastic moduli $E^*_1$ (MPa) and $E^*_2$ (MPa) of the surface layer and the inner layer were measured using EPLEXOR series manufactured by NETZSCH-Gerätebau GmbH, under the conditions of a temperature of 30°C, a frequency of 10 Hz, an initial strain of 5%, and a dynamic strain of 1% with deformation mode: stretch, to obtain ($E^*_2/E^*_1$), and the loss tangent $\tan\delta_2$ of the inner layer was measured with deformation mode: tension.

Then, |CR-SR|, $E^*_2 \times$|CR-SR|, and $\tan\delta_2 \times$|CR-SR| which are described above were calculated. The results are shown in Table 3 and Table 4.

4. Performance Evaluation Tests

(1) Evaluation of Rolling Resistance

The respective test tires were mounted to all the wheels of vehicles (front wheel drive vehicles produced in Japan and having an engine displacement of 2000 cc), and were filled with air such that the internal pressures thereof were 250 kPa. Then, each vehicle was caused to run around a test course with a dry road surface at a speed of 80 km/h for 10 km, then the accelerator was released, and the distance until the vehicle stopped after the accelerator was turned off was measured as rolling resistance.

Next, the rolling resistance was indexed based on the following equation with the result of Comparative Example 5 as 100, and was evaluated relatively. A higher value indicates that the distance from the timing when the accelerator was turned off to the time when the vehicle stopped is longer, the rolling resistance in the steady state is lower, and the low fuel consumption performance is better.

$$\text{Rolling resistance} = [(\text{measurement result of test tire}) / (\text{measurement result of Comparative Example 5})] \times 100$$

(2) Evaluation of Uneven Wear Resistance

The respective test tires were mounted to all the wheels of vehicles (front wheel drive vehicles produced in Japan and having an engine displacement of 2000 cc), and were filled with air such that the internal pressures thereof were 250 kPa. Then, each vehicle was caused to run on a test course with a dry road surface for 10000 km, the amounts of wear at a tread center portion and shoulder portion after running were obtained, and the ratio between both amounts was calculated. The closer the value of the ratio is to 1, the less the occurrence of uneven wear is.

Next, the uneven wear resistance was indexed based on the following equation with the calculation result of Comparative Example 5 as 100, and was evaluated relatively. A higher value indicates that less uneven wear occurred and the uneven wear resistance is better.

$$\text{Uneven wear resistance} = [(\text{calculation result of Comparative Example 5}) / (\text{calculation result of test tire})] \times 100$$

(3) Overall Evaluation

The evaluation results of (1) and (2) above were totaled as an overall evaluation.

(4) Evaluation Results

The results of each evaluation are shown in Table 3 and Table 4.

[Table 3]

| | Ex. 1 | Ex. 2 | Ex. 3 | Ex. 4 | Ex. 5 | Ex. 6 | Ex. 7 |
|---|---|---|---|---|---|---|---|
| (Blending formula) | | | | | | | |
| Blending formula of surface layer | A | A | B | C | C | B | C |
| Blending formula of inner layer | b | c | c | b | d | a | a |
| (Parameter) | | | | | | | |
| $E^*_1$ (MPa) | 9.6 | 9.6 | 10 | 9.1 | 9.1 | 10 | 9.1 |
| $E^*_2$ (MPa) | 6.5 | 7.7 | 7.7 | 6.5 | 6.5 | 4.8 | 4.8 |
| $\tan\delta_2$ | 0.06 | 0.07 | 0.07 | 0.06 | 0.05 | 0.07 | 0.07 |
| $E^*_2/E^*_1$ | 0.68 | 0.80 | 0.77 | 0.71 | 0.71 | 0.48 | 0.53 |
| \|CR-SR\| | 15 | 10 | 10 | 5 | 5 | 10 | 10 |
| $E^*_2\times$\|CR-SR\| | 97.50 | 77.00 | 77.00 | 32.50 | 32.50 | 48.00 | 48.00 |
| $\tan\delta_2\times$\|CR-SR\| | 0.90 | 0.70 | 0.70 | 0.30 | 0.25 | 0.70 | 0.70 |
| (Evaluation results) | | | | | | | |
| Rolling resistance | 110 | 114 | 114 | 116 | 118 | 118 | 120 |
| Uneven wear resistance | 124 | 118 | 112 | 120 | 118 | 124 | 128 |
| Overall evaluation | 234 | 232 | 226 | 236 | 236 | 242 | 248 |

[Table 4]

| | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| (Blending formula) | | | | | | |
| Blending formula of surface layer | D | D | B | A | D | E |
| Blending formula of inner layer | b | c | e | e | e | e |
| (Parameter) | | | | | | |
| $E^*_1$ (MPa) | 7.5 | 7.5 | 10 | 9.6 | 7.5 | 7.7 |
| $E^*_2$ (MPa) | 6.5 | 7.7 | 5.5 | 5.5 | 5.5 | 5.5 |
| $\tan\delta_2$ | 0.06 | 0.07 | 0.1 | 0.1 | 0.1 | 0.1 |
| $E^*_2/E^*_1$ | 0.87 | 1.03 | 0.55 | 0.57 | 0.73 | 0.71 |
| \|CR-SR\| | 18 | 20 | 20 | 20 | 20 | 20 |
| $E^*_2\times$\|CR-SR\| | 117.00 | 154.00 | 110.00 | 110.00 | 110.00 | 110.00 |
| $\tan\delta_2\times$\|CR-SR\| | 1.08 | 1.40 | 2.00 | 2.00 | 2.00 | 2.00 |
| (Evaluation results) | | | | | | |
| Rolling resistance | 89 | 91 | 93 | 96 | 100 | 95 |
| Uneven wear resistance | 79 | 82 | 91 | 94 | 100 | 95 |
| Overall evaluation | 168 | 173 | 184 | 190 | 200 | 190 |

From Table 3 and Table 4, it is found that the outer portion of each sidewall portion is overlapped on the outer side of the end portion in the tire width direction of the tread portion, each end portion in the width direction of the inner layer is located in a part of the interface between the surface layer and the sidewall, and $(E^*_2/E^*_1)<1.0$ (formula 1) and $|CR-SR|\leq 15$ (formula 2) are satisfied, whereby a pneumatic tire that achieves both reduction of rolling resistance and improvement of uneven wear resistance can be provided.

It is also found that, for example, when the above (formula 3) to (formula 7) are satisfied, or when the belt reinforcing layer is appropriately provided, reduction of rolling resistance and further improvement of uneven wear resistance can be achieved.

Although the present invention has been described based on the embodiment, the present invention is not limited to the above embodiment. Various modifications of the above embodiment can be made within the scope identical or equivalent to that of the present invention.

## Claims

**1.** A pneumatic tire comprising: a tread portion including at least two or more rubber layers including a surface layer and an inner layer in a center region centered at a tire equator line and having a width that is 50% of a ground-contact width of a ground-contact surface; and sidewall portions each having a sidewall rubber forming an outer surface, wherein

the tread portion has a circumferential groove extending in a circumferential direction, and includes a plurality of land portions demarcated by the circumferential groove and ground-contact end portions, and
an outer portion of each sidewall portion is overlapped on an outer side of an end portion in a tire width direction of the tread portion,
**characterized in that**
each end portion in the width direction of the inner layer of the tread portion is located in a part of an interface between the surface layer of the tread portion and the sidewall portion,
when a complex elastic modulus at 30°C of the surface layer of the tread portion is denoted by $E^*_1$ (MPa) and a complex elastic modulus at 30°C of the inner layer of the tread portion is denoted by $E^*_2$ (MPa), with $E^*_1$ and $E^*_2$ being measured under the conditions of a temperature of 30°C, a frequency of 10 Hz, an initial strain of 5%, and a dynamic strain of 1% with deformation mode being stretch, the following (formula 1) is satisfied, and
when a groove area ratio in the center region is denoted by CR (%) and a groove area ratio in a region obtained by excluding the center region from the ground-contact surface is denoted by SR (%), the following (formula 2) is satisfied,

$$(E^*_2/E^*_1)<1.0 \quad \text{(formula 1)},$$

$$|CR-SR|\leq 15 \quad \text{(formula 2)}.$$

**2.** The pneumatic tire according to claim 1, wherein the following (formula 3) is satisfied,

$$(E^*_2/E^*_1)<0.9 \quad \text{(formula 3)}.$$

**3.** The pneumatic tire according to claim 2, wherein the following (formula 4) is satisfied,

$$(E^*_2/E^*_1)<0.8 \quad \text{(formula 4)}.$$

**4.** The pneumatic tire according to any one of claims 1 to 3, wherein the following (formula 5) is satisfied,

$$E^*_2\times|CR-SR|\leq 100 \quad \text{(formula 5)}.$$

**5.** The pneumatic tire according to claim 4, wherein the following (formula 6) is satisfied,

$$E^*_2 \times |CR-SR| \leq 75 \quad \text{(formula 6)}.$$

**6.** The pneumatic tire according to any one of claims 1 to 5, wherein, when a loss tangent at 30°C of the inner layer of the tread portion is denoted by $\tan\delta_2$, the following (formula 7) is satisfied,

$$\tan\delta_2 \times |CR-SR| \leq 3.75 \quad \text{(formula 7)}.$$

**7.** The pneumatic tire according to any one of claims 1 to 6, further comprising a belt reinforcing layer on a radially inner side of the tread portion, wherein

in the center region of the tread portion,
a height Ht (mm) from an outer peripheral surface of the belt reinforcing layer to a surface of the circumferential land portion is not greater than 30 mm, and a height Hg (mm) from the outer peripheral surface of the belt reinforcing layer to a bottom surface of a main groove is not greater than 5 mm, and
a height h (mm) from the outer peripheral surface of the belt reinforcing layer at a center position in the width direction of the circumferential land portion to an interface between the surface layer and the inner layer of the tread portion is not less than 0.5 mm, and h>Hg is satisfied.

**8.** The pneumatic tire according to any one of claims 1 to 7, wherein

sipes are formed on a center land portion and shoulder land portions demarcated by two or more circumferential main grooves provided on the tread portion, and
directions of the sipes in adjacent land portions with respect to the tire circumferential direction are opposite to each other.

**9.** The pneumatic tire according to any one of claims 1 to 8, wherein a ratio of a total groove area to a total area in a ground-contact width of the tread portion is 20 to 40%.

## Patentansprüche

**1.** Luftreifen, welcher umfasst: einen Laufstreifenabschnitt, der mindestens zwei oder mehr Kautschukschichten enthält, die eine Oberflächenschicht und eine innere Schicht enthalten, in einem Zentrumsbereich, der an einer Reifenäquatorlinie zentriert ist und eine Breite aufweist, die 50% einer Bodenkontaktbreite einer Bodenkontaktoberfläche beträgt; und Seitenwandabschnitte, die jeweils einen Seitenwandkautschuk aufweisen, der eine äußere Oberfläche bildet, wobei

der Laufstreifenabschnitt eine Umfangsrille aufweist, die sich in einer Umfangsrichtung erstreckt, und eine Mehrzahl an Positivprofilabschnitten enthält, die durch die Umfangsrille und Bodenkontakt-Endabschnitte begrenzt sind, und
ein äußerer Abschnitt jedes Seitenwandabschnitts auf einer äußeren Seite eines Endabschnitts in einer Reifenbreitenrichtung des Laufstreifenabschnitts überlappt ist,
**dadurch gekennzeichnet, dass**
jeder Endabschnitt in der Breitenrichtung der inneren Schicht des Laufstreifenabschnitts sich in einem Teil einer Grenzfläche zwischen der Oberflächenschicht des Laufstreifenabschnitts und dem Seitenwandabschnitt befindet,
wenn ein komplexer Elastizitätsmodul bei 30°C der Oberflächenschicht des Laufstreifenabschnitts durch $E^*_1$ (MPa) bezeichnet ist und ein komplexer Elastizitätsmodul bei 30°C der inneren Schicht des Laufstreifenabschnitts durch $E^*_2$ (MPa) bezeichnet ist, wobei $E^*_1$ und $E^*_2$ unter Bedingungen einer Temperatur von 30°C, einer Frequenz von 10 Hz, einer Anfangsdehnung von 5% und einer dynamischen Dehnung von 1%, wobei der Verformungsmodus Strecken ist, gemessen ist, die folgende (Formel 1) erfüllt ist, und
wenn ein Rillenflächenanteil in dem Zentrumsbereich durch CR (%) bezeichnet ist und ein Rillenflächenanteil in einem durch Ausschließen des Zentrumsbereichs aus der Bodenkontaktoberfläche erhaltenen Bereich durch SR (%) bezeichnet ist, die folgende (Formel 2) erfüllt ist,

$$(E^*_2/E^*_1)<1,0 \quad \text{(Formel 1)},$$

$$|CR-SR|\leq 15 \quad \text{(Formel 2)}.$$

**2.** Luftreifen nach Anspruch 1, wobei die folgende (Formel 3) erfüllt ist,

$$(E^*_2/E^*_1)<0,9 \quad \text{(Formel 3)}.$$

**3.** Luftreifen nach Anspruch 2, wobei die folgende (Formel 4) erfüllt ist,

$$(E^*_2/E^*_1)<0,8 \quad \text{(Formel 4)}.$$

**4.** Luftreifen nach einem der Ansprüche 1 bis 3, wobei die folgende (Formel 5) erfüllt ist,

$$E^*_2\times|CR-SR|\leq 100 \quad \text{(Formel 5)}.$$

**5.** Luftreifen nach Anspruch 4, wobei die folgende (Formel 6) erfüllt ist,

$$E^*_2\times|CR-SR|\leq 75 \quad \text{(Formel 6)}.$$

**6.** Luftreifen nach einem der Ansprüche 1 bis 5, wobei, wenn ein Verlusttangens bei 30°C der inneren Schicht des Laufstreifenabschnitts durch $\tan\delta_2$ bezeichnet ist, die folgende (Formel 7) erfüllt ist,

$$\tan\delta_2\times|CR-SR|\leq 3,75 \quad \text{(Formel 7)}.$$

**7.** Luftreifen nach einem der Ansprüche 1 bis 6, welcher zudem eine Gürtelverstärkungsschicht auf einer radial inneren Seite des Laufstreifenabschnitts umfasst, wobei

in dem Zentrumsbereich des Laufstreifenabschnitts
eine Höhe Ht (mm) von einer äußeren Umfangsoberfläche der Gürtelverstärkungsschicht zu einer Oberfläche des Umfangspositivprofilabschnitts nicht größer ist als 30 mm, und eine Höhe Hg (mm) von der äußeren Umfangsoberfläche der Gürtelverstärkungsschicht zu einer Bodenoberfläche einer Hauptrille nicht größer ist als 5 mm, und
eine Höhe h (mm) von der äußeren Umfangsoberfläche der Gürtelverstärkungsschicht an einer Zentrumsposition in der Breitenrichtung des Umfangspositivprofilabschnitts zu einer Grenzfläche zwischen der Oberflächenschicht und der inneren Schicht des Laufstreifenabschnitts nicht weniger als 0,5 mm beträgt, und h>Hg erfüllt ist.

**8.** Luftreifen nach einem der Ansprüche 1 bis 7, wobei

auf einem Zentrumspositivprofilabschnitt und Schulterpositivprofilabschnitten, die durch zwei oder mehr auf dem Laufstreifenabschnitt vorgesehene Umfangshauptrillen begrenzt sind, Einschnitte gebildet sind, und Richtungen der Einschnitte in benachbarten Positivprofilabschnitten bezüglich der Reifenumfangsrichtung einander entgegengesetzt sind.

**9.** Luftreifen nach einem der Ansprüche 1 bis 8, wobei ein Verhältnis einer gesamten Rillenfläche zu einer gesamten Fläche in einer Bodenkontaktbreite des Laufstreifenabschnitts 20 bis 40% beträgt.

## Revendications

1. Bandage pneumatique comprenant : une portion formant bande de roulement incluant au moins deux ou plusieurs couches de caoutchouc incluant une couche de surface et une couche intérieure dans une région centrale centrée au niveau d'une ligne d'équateur de pneumatique et ayant une largeur qui est de 50 % d'une largeur de contact au sol d'une surface de contact au sol ; et des portions formant parois latérales ayant chacune un caoutchouc de parois latérales formant une surface extérieure, dans lequel

   la portion formant bande de roulement a une rainure circonférentielle s'étendant dans une direction circonférentielle, et inclut une pluralité de portions en relief délimitées par la rainure circonférentielle et des portions d'extrémité de contact au sol ; et
   une portion extérieure de chaque portion formant paroi latérale est recouverte sur un côté extérieur d'une portion d'extrémité dans une direction de la largeur du pneumatique de la portion formant bande de roulement ;
   **caractérisé en ce que**
   chaque portion d'extrémité dans la direction de la largeur de la couche intérieure de la portion formant bande de roulement est située dans une partie d'une interface entre la couche de surface de la portion formant bande de roulement et la portion formant paroi latérale,
   quand un module d'élasticité complexe à 30 °C de la couche de surface de la portion formant bande de roulement est désigné par $E^*_1$ (MPa) et un module d'élasticité complexe à 30 °C de la couche intérieure de la portion formant bande de roulement est désigné par $E^*_2$ (MPa), $E^*_1$ et $E^*_2$ étant mesurés sous les conditions d'une température de 30 °C, d'une fréquence de 10 Hz, d'une contrainte initiale de 5 % et d'une contrainte dynamique de 1 % avec un mode de déformation étiré, la (formule 1) suivante est satisfaite, et
   quand un rapport d'aire de rainure dans la région centrale est désigné par CR (%) et un rapport d'aire de rainure dans une région obtenue en excluant la région centrale de la surface de contact au sol est désigné par SR (%), la (formule 2) est satisfaite,

   $$(E^*_2/E^*_1) < 1{,}0 \qquad \text{(formule 1)},$$

   $$|CR\text{-}SR| \leq 15 \qquad \text{(formule 2)}.$$

2. Bandage pneumatique selon la revendication 1, dans lequel la (formule 3) suivante est satisfaite,

   $$(E^*_2/E^*_1) < 0{,}9 \qquad \text{(formule 3)}.$$

3. Bandage pneumatique selon la revendication 2, dans lequel la (formule 4) suivante est satisfaite,

   $$(E^*_2/E^*_1) < 0{,}8 \qquad \text{(formule 4)}.$$

4. Bandage pneumatique selon l'une quelconque des revendications 1 à 3, dans lequel la (formule 5) suivante est satisfaite,

   $$E^*_2 \times |CR\text{-}SR| \leq 100 \qquad \text{(formule 5)}.$$

5. Bandage pneumatique selon la revendication 4, dans lequel la (formule 6) suivante est satisfaite,

   $$E^*_2 \times |CR\text{-}SR| \leq 75 \qquad \text{(formule 6)}.$$

6. Bandage pneumatique selon l'une quelconque des revendications 1 à 5, dans lequel, quand une tangente de perte à 30 °C de la couche intérieure de la portion formant bande de roulement est désignée par $\tan\delta_2$, la (formule 7) suivante est satisfaite,

$$\tan\delta_2 \times |CR\text{-}SR| \leq 3{,}75 \qquad \text{(formule 7).}$$

**7.** Bandage pneumatique selon l'une quelconque des revendications 1 à 6, comprenant en outre une couche de renforcement de ceinture sur un côté radialement intérieur de la portion formant bande de roulement, dans lequel dans la région centrale de la portion formant bande de roulement,

une hauteur Ht (mm) depuis un surface périphérique extérieure de la couche de renforcement de ceinture sur une surface de la portion en relief circonférentielle n'est pas supérieure à 30 mm, et une hauteur Hg (mm) depuis la surface périphérique extérieure de la couche de renforcement de ceinture sur une surface de fond d'une rainure principale n'est pas supérieure à 5 mm, et
une hauteur h (mm) depuis la surface périphérique extérieure de la couche de renforcement de ceinture à une position centrale dans la direction de la largeur de la portion en relief circonférentielle sur une interface entre la couche de surface et la couche intérieure de la portion formant bande de roulement n'est pas inférieure à 0,5 mm, et la relation h > Hg est satisfaite.

**8.** Bandage pneumatique selon l'une quelconque des revendications 1 à 7, dans lequel
des fentes sont formées sur une portion en relief centrale et des portions en relief d'épaulement délimitées par deux ou plusieurs rainures principales circonférentielles prévues sur la portion formant bande de roulement, et des directions des fentes dans des portions en relief adjacentes par rapport à la direction circonférentielle du pneumatique sont opposées les unes aux autres.

**9.** Bandage pneumatique selon l'une quelconque des revendications 1 à 8, dans lequel un rapport d'une aire de rainure totale sur une aire totale dans une largeur de contact au sol de la portion formant bande de roulement est de 20 à 40 %.

Fig. 1

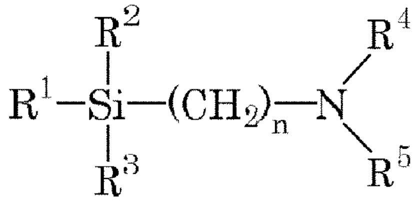

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018178034 A
- JP 2019089911 A
- WO 2018186367 A
- JP 2019206643 A
- WO 2014090845 A1
- EP 2781373 A1
- EP 1630003 A1
- EP 3181376 A1
- WO 2019066837 A1
- US 4414370 A
- JP S596207 A
- JP H558005 B
- JP H1313522 A
- US 5010166 A


### Non-patent literature cited in the description


- TREND. Toagosei Co., Ltd, 2000, 42-45